# EUROPÄISCHE PATENTSCHRIFT

(11) **EP 1 098 161 B1**
(45) Veröffentlichungstag und Bekanntmachung des Hinweises auf die Patenterteilung: **26.07.2006**
(21) Anmeldenummer: 00123366.7
(22) Anmeldetag: 31.10.2000
(51) Int. Cl.: F41H 5/04

(54) **Verwendung von Elementen aus einem mit Fasern verstärkten Verbundwerkstoff mit keramischer Matrix**
Use of elements made of fibre-reinforced ceramic composite material
Utilisation d'éléments en matériau céramique composite renforcé par des fibres

(30) Priorität: 04.11.1999 DE 19953259
(43) Veröffentlichungstag der Anmeldung: 09.05.2001
(73) Patentinhaber: SGL CARBON AG, 65203 Wiesbaden (DE)
(72) Erfinder: Gruber, Udo, Dipl.-Ing. (FH), 86356 Neusäss (DE); Heine, Michael, Dipl.-Chem. Dr., 86695 Allmannshofen (DE); Kienzle, Andreas, Dipl.-Chem.Dr.rer.nat., 86672 Thierhaupten (DE); Nixdorf, Reinhard, Dipl.-Ing. (FH), 86695 Nordendorf (DE)

(56) Entgegenhaltungen:
- EP-A- 0 994 084
- EP-A- 1 008 569
- DE-A- 19 710 105
- DE-C- 19 711 829
- DE-C- 19 831 725
- US-A- 5 114 772
- US-A- 5 635 300

## Beschreibung

Die Erfindung betrifft Verbunde umfassend eine Platte mit einer Dicke von mindestens 2,4 mm aus einem mit Kohlenstoff- und/oder Graphitfasern verstärkten Verbundwerkstoff mit keramischer Matrix, und einem Backing, sowie Verfahren zu ihrer Herstellung. Die erfindungsgemäßen Verbunde sind geeignet zur Absorption mindestens einer stoßartigen, punktuellen Belastung.

Im folgenden sowie in den Ansprüchen werden unter dem Begriff Fasern sowohl einzelne Fasern als auch die zumeist verwendeten Faserbündel zusammengefasst, die gegenüber einzelnen Fasern eine wesentlich größere Breite und auch Höhe aufweisen können.

Faserverstärkte Verbundwerkstoffe mit keramischer Matrix sind seit langer Zeit bekannt und zeichnen sich im allgemeinen durch eine hohe Festigkeit, Steifigkeit bei gleichzeitig geringem Gewicht aus. Diese Eigenschaften bleiben auch bis zu hohen Temperaturen erhalten. Die faserverstärkten Verbundwerkstoffe haben eine hohe Wärmeleitfähigkeit und gleichzeitig eine niedrige Wärmeausdehnung und somit eine ausgezeichnete Temperaturwechselbeständigkeit.

Ausgehend von mit Kohlenstofffaser verstärkten Verbundwerkstoffen mit Kohlenstoffmatrix (CFC) werden in den letzten zehn Jahren zunehmend Verbundwerkstoffe mit SiC als Matrix entwickelt, wobei als verstärkende Fasern Kohlenstoff (C/SiC)- und Siliziumcarbidfasern (SiC/SiC) verwendet werden.

Aus DE 197 10 105 A1 ist ein mit Graphitkurzfasern verstärkter Siliziumcarbidkörper bekannt, der ein quasiduktiles Brachverhalten hat. Die verstärkenden Graphitkurzfasern sind von mindestens einer Hülle aus graphitiertem Kohlenstoff, die durch Imprägnierung mit carbonisierbaren Imprägniermitteln und nachfolgendes Carbonisieren erhalten worden sind, umgeben. Die Hülle der Fasern wird bei der Herstellung des C/SiC- Verbundwerkstoffs zum Teil in Siliziumcarbid umgewandelt. Hierbei wird der Verbundkörper mit Flüssigsilizium infiltriert, wobei auch die mindestens teilweise Umsetzung der Kohlenstoffmatrix des carbonisierten Vorproduktes in Siliziumcarbid erfolgt.

In der Diskussion dieses Standes der Technik werden als Verwendungsmöglichkeiten von Verbundwerkstoffen allgemein Auskleidungsmaterialien für wiederverwendbare Raumflugkörper, Düsenauskleidungen von Strahltriebwerken, Turbinenschaufeln oder auch Reibbeläge angesprochen. Die Verbundwerkstoffe, die in DE-A-197 10 105 beschrieben sind, können als Teile von Gasturbinen, als Komponenten von Brennern und Düsen, als Heißgasrohre oder auch als Reibstoffe für hohe Belastungen wie Beläge für Bremsen verwendet werden.

Aus DE 197 11 829 C1 ist ein Verfahren zur Herstellung einer faserverstärkten Verbundkeramik mit hochwarmfesten Fasern bekannt, die mit einer Matrix auf Basis von Silizium und Siliziumcarbid oder einer Siliziumlegierung wie zum Beispiel in DE 41 27 693 A1 beschrieben reaktionsgebunden sind. Derartige Verbundkörper werden zur Herstellung von Großserienbauteilen wie Bremsscheiben verwendet.

Die Verwendung von Keramiken als Panzerungssystem ist wegen ihrer leichten Gewichte ebenfalls bekannt. Keramiken zeichnen sich im allgemeinen durch hohe Steifigkeit und Härte aus. Bei der Verwendung zur Panzerung ist es wesentlich, dass die Keramiken einer plastischen Deformation unter hoher Belastung widerstehen können. Eine hohe Zugfestigkeit ist insbesondere auf der Rückfläche einer Panzerungsplatte erforderlich. Aus diesem Grunde besteht daher eine typische Panzerung, bei der ein Keramikverbund verwendet wird, aus einer Keramikvorderseite, die auf ihrer Rückseite mit einem faserigen Verbund oder Metallsubstrat als Verstärkung (Backing) versehen ist Üblicherweise werden diese unterschiedlichen Materialien durch Kleben miteinander verbunden. Als Keramikmaterial werden Glas, Glaskeramik oder technische Keramiken wie Oxide, Boride oder auch Carbide eingesetzt. Insbesondere hat sich Aluminiumoxid ausgezeichnet, weil es auch vemältnismäßig kostengünstig ist. Die Fähigkeit, einer plastischen Deformation zu widerstehen, ist bei Keramiken jedoch nicht zufriedenstellend. Da Keramiken ein sprödes Bruchverhalten zeigen, führt eine punktuelle Belastung der Keramik zum Beispiel durch ein Projektil zu einer durchgehenden Rissbildung in der Keramik, so dass die Keramik großflächig zerstört wird und damit ihre Schutzwirkung verliert. Diesem Problem kann bis heute nur dadurch abgeholfen werden, das kleine Keramiksegmente mit eine maximalen Ausdehnung von 3 cm für einen sehr hohen Schutz (Sicherheitsautos) und von 10 cm für einen einfachen z.B. militärischen Schutz in der Ebene senkrecht zur Einwirkung der punktuellen Belashmg auf einem Backing montiert werden. Somit wird bei einem Auftreffen von einem Projektil immer nur ein Keramiksegment zerstört. Ein aus solchen Keramiksegmenten aufgebauter Verbund ist jedoch sehr aufwendig in seiner Herstellung. Als großflächiges Schutzelement können Keramiken alleine jedoch bisher nicht verwendet werden.

Beim Beschuss einer Panzerungsplatte mit einem Projektil erfolgt bei einer herkömmlichen Keramik durch Reflexion der Spannuagswellen innerhalb der Keramikplatte ein Bruch der Keramikplatte selbst. Nur weil hinter der Keramikplatte eine weitere Rückseite zum Beispiel aus Metall angebracht ist, kann verhindert werden, dass das Projektil vollständig diese Panzerungsplatte durchdringt.

Bei der Verwendung für Panzerungsplatten ist es erforderlich, dass die Keramik eine deutlich höhere Härte aufweist als das Material des Projektils, das üblicherweise eine Vickers-Harte von etwa 6,5 bis 8,0 kN/mm² hat, Es wäre daher günstig, Materialien mit einer Härte von mehr als etwa 9,8 kN/mm² zu verwenden. Wenn die Keramik zu weich ist, dringt der Prqjektilkem durch die Keramik hindurch, weil er durch die Keramik nicht beschädigt bzw. abgeflacht wird.

Es gibt jedoch auch Munitionen mit deutlich höherer Härte, insbesondere wenn eine Munition mit einem Kein aus Wolframcarbid in einer Nckel-Eisen-Matrix verwendet wird. In einem solchen Fall kann die Härte auf beispielsweise ca. 11 kN/mm² ansteigen.

Eine Keramik aus hochreinem Aluminiumoxid könnte einem solchen Projektil widerstehen, weil diese eine Härte von mehr als etwa 16,6 kN/mm² aufweist. Ebenso ist es möglich, andere Keramikmaterialien, beispielsweise das bereits erwähnte Siliziumcarbid, Borcarbid oder auch Titandiborid zu verwenden, deren Härte deutlich höher ist.

Ebenso ist es bekannt, mit Zirkonia verstärktes Aluminiumoxid oder Titanboride zu verwenden. Jedoch muss bei der Herstellung ein HeiBpressverfahren angewandt werden, um die optimalen Eigenschaften zu erhalten. Dazu werden die Pulver aus dem jeweiligen Ausgangsmaterial kompaktiert und in einer Graphitdüse unter Schutzgasatmosphäre erwäimt Wegen des komplizierteren Herstellungsverfahrens sind folglich die Kosten einer einzelnen Panzenmgsplatte hoch.

Angesichts des Preis-Leistungsverhältnisses wird Aluminiumoxid bisher als Keramikmaterial der Wahl angesehen.

Inzwischen wurden erste Versuche unternommen, anstatt der herkömmlichen Keramiken faserverstärkte Verbundwerkstoffe mit keramischer Matrix zum Schutz vor Projektilen einzusetzen. So wurden Versuche mit SiC/SiC-Verbundwerkstoffen durchgeführt. Sie zeigten eine begrenzte Schädigung des Werkstoffs durch das auftreffende Profil, so dass ein Schutz durch den Werkstoff gegen Mehrfachbeschuss aus einer automatischen Waffe gegeben ist (Multi- hit). Allerdings war die Schutzwirkung gegen Projektile im Vergleich zu den bekannten Keramiken recht gering. (Orsini and Cottenot, 15th International Symposium on Ballistics, Jerusalem, 1995).

Aus der DE 198 31 725 ist eine Panzerplatte mit große Härte bei hoher Festigkeit und Elastizität für Flugkörper bekannt umfassend eine Keramik-Kohlenstofffaserverbundschicht, die aus einem mit Kohlenstoff-Kurzfasern angereicherten Harz gefertigt ist. Zusätzlich sind in dem Harz weitere, lange Kohlenstofffasern räumlich wahllos verteilt, beispielsweise in Form von Schlingen, oder in Form eines Gewebes angeordnet. Die Kurzfasern sind hoch- oder ultrahochmodulige Kohlenstofffasern und die weiteren Kohlenstofffasern sind hochdehnfähig. Die Kohlenstofffaserverbundschicht ist carbonisiert und mit Siliziumcarbid versintert. Ggf ist die Keramik-Kohlenstofffaserverbundschicht auf ihrer Voderseite mit einer elastischen Kunststoffschicht und/oder auf ihrer Rückseite mit einer Fangschicht aus einem Faserverbundwerkstoff oder aus Faser-Gummiverbundwerkstoff versehen.

Aus der nachveröffentlichten EP 1 008 569 ist ein Verfahren zur Herstellung eines kohlenstofffaserverstärkten Siliciumcarbid-Werkstoff bekannt, das folgende Schritte umfasst:
a) Vermischung von zerkleinerten und beschichteten Fasern bzw. -bündeln mit einem trockenen Phenolharz-Pulver od. dgl., wobei die Beschichtung der Kohlenstofffaser-Rovings bzw. Faserbündel mit Epoxyharz und/oder Glycerin und/oder Furfuryl-Harz und/oder Silanen mit anschließender Trocknung und Aushärtung vorgenommen war;
b) Formgebung unter Druck und/oder Temperatur;
c) Entformen nach Aushärtung;
d) Schaaelzinfiltration von Silicium bei Temperaturen oberhalb des Schmelzpunktes von Silicium im Vakuum oder unter Schutzgasatmosphäre.

Unter den Verwendungsmöglichkeiten dieses Werkstoffs wird auch der ballistische Schutz aufgeführt. Ballistische Schutzvorrichtungen umfassend eine Kombination des faserverstärkten keramischen Werkstoffs mit einem Backing werden dabei jedoch nicht erwähnt.

US 5 114 772, welche eine Grundlage für die unabhängigen Ansprüche 1 und 7 bildet, beschreibt ein mehrlagiges Material zum Schutz gegen Projektile, das eine Kombination aus einem faserverstärkten keramischen Verbundwerkstoff und einer Vielzahl einzelner gesinterter keramischer Bauelemente ähnlich dem bereits vorstehend beschriebenen Segmentaufbau, darstellt. Die keramischen Elemente sind beispielsweise plattenförmig und bedecken die Vorderseite des faserverstärkten keramischen Verbundwerkstoffs, oder sie sind plättchen- oder kugelförmig und in der faserverstärkten Verbundwerkstoffschicht eingebettet, oder sie haben die Form von Splittern und werden in den faserverstärkten Verbundwerkstoff hineingebohrt. Geeignete Materialien für die gesinterten keramischen Elemente sind Siliciumcarbid, Aluminiumoxid oder Bornitrid. Der faserverstärkte Werkstoff kann beispielsweise ein carbonfaserverstärkter keramischer Werkstoff mit durch Infiltration erzeugter Matrix aus SiC sein, oder ein Werkstoff mit SiC-Matrix und Verstärkungsfasern aus SiC (SiCSiC- Verbundwerkstoff). Auch mit Carbonfasern oder Keramikfasern verstärkte Werkstoffe mit einer Matrix, die Aluminiumoxid, Zirkonium- oder Borcarbid enthält, werden vorgeschlagen. Die Schicht aus faserverstärkten keramischen Verbundmaterial ist in der nach US 5 114 772 nicht direkt dem Beschuss ausgesetzt. Ein Backing aus Metall oder Gewebe ist nicht vorgesehen.

Aufgabe dieser Erfindung ist es, demgegenüber einen keramischen Werkstoff für Verbunde aus einem Backing aus Gewebe oder Metall und einer Platte aus einem keramischen faserverstärkten Verbundwerkstoff zu finden mit einem geringen spezifischen Gewicht, der eine gute Beschussfestigkeit aufweist und dabei auch einem wiederholten Beschuss standhält.

Die Lösung dieser Aufgaben besteht in einem Verbund aus einem Backing aus Metall oder Gewebe und einer Platte von mindestens 2,4 mm Dicke aus einem faserverstärkten keramischen Werkstoff mit einer Matrix enthaltend 55 bis 80 Gewichtsprozent Siliziumcarbid, 10 bis 40 Gewichtsprozent Kohlenstoff und 2 bis 20 Gewichtsprozent Silizium bezogen auf die Gesamtmasse des Verbundwerkstoff, wobei der Faseranteil des Verbundwerkstoffs 8 bis 30 Gewichtsprozent des Gesamtgewichts beträgt. Die mittlere Faserlänge der Verstärkungsfasern beträgt 0,5 bis 5 mm, und die Fasern sind mit mindestens einer Schicht graphitierten Kohlenstoffs beschichtet.

Die Dicke der verwendeten Elemente aus dem faserverstärkten Verbundwerkstoff kann insbesondere in erfindungsgemäßen Verbunden reduziert werden, bei denen die Elemente eine rückwärtige Verstärkung aufweisen (auch Backing genannt), die zumeist aufgeklebt wird.

Insbesondere werden die erfindungsgemäßen Elemente und Verbunde als Strukturbauteile verwendet. Sie dienen hier zur Panzerung u.a. im Fahrzeugbau sowohl ziviler wie auch militärischer Art einschließlich Panzern, dem Automobilbau, dem Luftfahrzeugbau z.B. von Hubschrauber und Flugzeugen, dem Schiffsbau und dem Bau von Bahnfahrzeugen. Auch die Panzerung von feststehenden Objekten wie z.B. Gebäuden und Tresoren ist mit den erfindungsgemäßen Elementen und Verbunden möglich, z.B. als Strukturbauteil. Weiterhin können die erfindungsgemäßen Elemente und Verbunde auch in Schutzwesten benutzt werden.

Auch in der Raumfahrt auftreffende Projektile können bei entsprechender Auslegung der erfindungsgemäßen Elemente und Verbunde durch diese absorbiert werden, so daß auch eine Verwendung zum Schutz von Raumfahrzeugen möglich ist.

Durch Verwendung der beschriebenen Elemente und Verbunde ist es insbesondere möglich, daß eine Belastung z.B. durch Granatsplitter, durch Beschuß, zum Beispiel durch Projektile jeglicher Art absorbiert wird, ohne daß der Verbundkörper reißt und in mehrere Stücke zerplatzt. Dieses Verhalten ist vollkommen überraschend und konnte nicht erwartet werden, insbesondere weil hinlänglich bekannt war, daß nicht- faserverstärkte Keramikmaterialien ein verhältnismäßig sprödes Verhalten aufweisen und somit bei Beschuß eine Platte aus diesem Keramikmaterial in mehrere Teile zerreißt. Wenn die Elemente und die rückwärtig verstärkten Elemente eine geringere Dicke aufweisen, kann ein Durchschuß auftreten, ohne daß jedoch gleichzeitig ein bei herkömmlichen Keramikmaterialien unerwünschtes Zerspringen oder Zersplittern auftritt.

Da die erfindungsgemäßen Elemente und Verbunde nicht bei einer punktuellen Belastung zerspringen, bieten sie im Gegensatz zu den bekannten Panzerungen auf Keramikbasis auch Schutz gegen mehrfachen Beschuß. Daher können die erfindungsgemäßen Elemente aus verstärkten Verbundwerkstoffen mit keramischer Matrix auch mit größeren Abmessungen als Panzerung eingesetzt werden, als von den bisher eingesetzten Keramiken bekannt. Gegenüber diesen können die erfindungsgemäßen einteiligen Elemente und Verbunde Abmessungen größer 3 cm, bevorzugt größer 10 cm und besonders bevorzugt größer 30 cm aufweisen. Auch noch größere Abmessungen sind für die Elemente möglich, so daß durch sie zum Beispiel Teile an Kraftfahrzeugen als Panzerungschutz ersetzt werden können.

Weiterhin zeigen die erfindungsgemäßen Elemente und Verbunde auch ein sehr gutes Verhalten beim Beschuß mit automatischen Waffen (Multi- Hit- Eigenschaften), da der Werkstoff nur direkt im Bereich des Beschusses geschwächt wird.

Der faserverstärkte Verbundwerkstoff mit keramischer Matrix der erfindungsgemäßen Elemente ist zur wesentlichen Absorption einer jeden stoßartigen punktuellen Belastung geeignet und kann daher für die verschiedensten Arten in der Schutztechnik eingesetzt werden. Technisch interessant ist insbesondere die Verwendung der Elemente und Verbunde in Form von Panzerungsplatten, beispielsweise für Automobile. So ist es beispielsweise möglich, Karosserieteile oder Karosserieverstärkungen für Flugzeuge, Flugkörper, Züge oder auch Autos aus diesem Verbundwerkstoff herzustellen und somit Fahrzeuge zu erhalten, die gegenüber Beschuß vollkommen sicher sind, ohne daß sich deren Gewicht zu sehr erhöht.

Ebenso ist es möglich, durch Verwendung der faserverstärkten Verbundwerkstoffe beispielsweise den Bodenbereich einer Hubschrauberkanzel auszukleiden.

Ein ähnlicher Schutz gegenüber Beschuß kann auch Schiffen verliehen werden, die zumindest teilweise aus diesem Material hergestellt werden können.

Ebenso ist es möglich, den faserverstärkten Verbundwerkstoff zum Schutz von Gebäuden, Bunkern und Lagern z.B. Treibstofflager oder Personenlager (Zeltlager), aber auch Fernmeldeanlagen oder Radarstationen einzusetzen, ohne daß hierfür teure oder sehr schwere Materialien verwendet werden müssen.

Erfindungsgemäß ist es selbstverständlich auch möglich, die faserverstärkten Verbundwerkstoffe als Splitterschutz insbesondere als Schutz gegenüber Granatsplitter zu verwenden. In diesem Fall kann sogar die Dicke einer Schutzplatte aus diesem Verbundwerkstoff dünner als bei dem Schutz gegenüber Projektilen gemacht werden.

Die Verwendung der faserverstärkten Verbundwerkstoffe mit keramischer Matrix umfaßt auch den Schutz im zivilen Bereich, zum Beispiel in Form einer Einlage für Schutzwesten oder allgemein für Bekleidung, die am menschlichen Körper getragen wird.

Weiterhin ist es möglich, durch die erfindungsgemäß beschriebene Verwendung einen Schutz von Bauteilen von Weltraumstationen zum Beispiel gegenüber Meteoriteneinschlägen zu erhalten.

Die erfindungsgemäß verwendeten, faserverstärkten Verbundwerkstoffe zeichnen sich insbesondere dadurch aus, daß die Festkörperstruktur während der Energieeinwirkung sehr lange erhalten bleibt. Die einwirkende Energie wird dann innerhalb des Werkstoffes transformiert.

Außerdem zeichnen sich die erfindungsgemäß verwendeten Elemente und Verbunde durch ein besonders geringes spezifisches Gewicht aus. Während bekannte Keramikmaterialien wie Aluminiumoxid ein verhältnismäßig hohes spezifisches Gewicht aufweisen (das spezifische Gewicht von Aluminiumoxid liegt bei 3,8 g/cm³) haben die erfindungsgemäß verwendeten Verbundwerkstoffe ein deutlich geringeres spezifisches Gewicht von nur 2,0 bis 2,7 g/cm³, insbesondere 2,3 bis 2,4 g/cm³. Dies bedeutet, daß die erfindungsgemäß verwendeten Verbundwerkstoffe insbesondere ein erheblich niedrigeres spezifisches Gewicht als die bisher verwendeten metallischen, ballistischen Stähle haben, die eine Dichte von ca. 7,8 g/cm³ aufweisen. Ihr spezifisches Gewicht ist aber auch niedriger als das der bekannten Aluminiumoxidkeramiken. Dies ermöglicht bei der Verwendung dieser Materialien im Fahrzeug-, Flugzeug- und Schiffsbau und auch im Personenschutz ein deutliches Gewichtseinsparungspotential.

Die erfindungsgemäß verwendeten Verbundkörper zeichnen sich durch ein sehr gutes Bruchverhalten aus, wie bei den später dargelegten Beschußversuchen beobachtet werden konnte. Die auf den Werkstoff einwirkende mechanische Impulsenergie eines Projektils wird über innere, energieverzehrende Effekte im Verbundkörper absorbiert, wobei in den Bereichen der Matrix zwischen den Fasern Mikrorisse induziert werden, die nach und nach die Energie der Geschosse aufnehmen. Hierbei erfolgt eine Abflachung bzw. Aufpilzung der auftretenden Projektile, wobei das Geschoß abgebremst wird und eine Umwandlung der kinetischen Energie in Energie zur Rißbildung erfolgt.

Als Fasern können neben Kohlenstoff- und Graphitfasern auch technisch äquivalente Fasern verwendet werden wie Aluminiumoxid-, Siliziumnitrid- und Si/B/C/N- Fasern, die z.B. in DE 197 11 829 C1 angegeben werden. Diese können zusätzlich oder anstatt der Kohlenstoff- und Graphitfasern im Verbundwerkstoff der erfindungsgemäßen Elemente und Verbunde enthalten sein. Bevorzugt werden Fasern auf der Basis von Silizium, Kohlenstoff, Bor, Stickstoff, Aluminium oder Mischungen hiervon eingesetzt.

Grundsätzlich sollte bei der Auswahl der Fasern das Kriteium erfüllt sein, daß diese Fasern hochwarmfeste Fasern sind und somit Temperaturen von bis zu etwa 1600°C aushalten können, damit sie bei der Infiltration mit schmelzlüssigen Materialen nicht schnell beschädigt werden. Herkömmliche Materialien weisen keinen Faserschutz (Hülle) auf, so daß z.B. ungeschützte Kohlenstoffasern bei der Infiltration mit Silizium angegriffen werden und es unmöglich ist, ein duktiles Material zu erhalten. Die erfindungsgemäß verwendeten Fasern weisen daher vorteilhafterweise eine Schutzbeschichtung auf. Diese besteht bevorzugt aus mindestens einer Kohlenstoff- oder Graphitschicht, die durch Verkoken von z.B. Kunstharzen und/oder anderen kohlenstoffspendenden Stoffen entstehen und womöglich nachfolgendes Graphitieren. Mehrere Schutzschichten aus Kohlenstoff oder Graphit werden besonders bevorzugt. Die Herstellung einer solchen, mit Schutzhülle(n) versehenen Faser ist z.B. aus DE 197 10 105 A1 bekannt.

Neben Kurzfasern können in den Verbundwerkstoffen der erfindungsgemäßen Elemente auch Fasern mit einer größeren Länge verwendet werden. Grundsätzlich gibt es im Hinblick auf die Faserlänge keine Beschränkung. Werden Kurzfasern (Faserlängen bis ca. 4 mm) und Fasern größerer Länge in den Verbundwerkstoff eingebracht, so tragen vor allem die längeren Fasern zur Verstärkung des Werkstoffs bei. Der Anteil dieser längeren Fasern wird daher im folgenden und in den Ansprüchen mit Verstärkungsfaser bezeichnet. Bei Verbundwerkstoffen, die nur Kurzfasern enthalten, sind dies die Verstärkungsfasern. Die Bündelstärke der Fasern (eigentlich Faserbündel) beträgt üblicherweise 1000 bis 920.000 Filamenten. Die Fasern der erfindungsgemäßen Elemente haben bevorzugt eine Bündelstärke von 1 bis 3000 Filamenten.

Als Ausgangsmaterial für die Fasern kann auch ein organisches Polymer wie zum Beispiel Polyacrylnitril oder Cellulose verwendet werden, aus dem flächige Gebilde wie Gewebe oder Vliese hergestellt werden können, wie in DE 195 17 911 A1 beschrieben ist. Wird Cellulose verwendet, wird diese in einem Vorverfahren unschmelzbar gemacht. Es ist auch möglich, anorganische Polymere zu verwenden, die zu Vliesen versponnen werden. Als Materialien können Polysilane, Polysilazane, Carbosilane, die unschmelzbar gemacht werden, oder Vliese aus borhaltigen Silazanen erwähnt werden. Günstig ist es, wenn Gewebe mit niedrigviskosen Substanzen wie Furfuryalkohol, Polyphenylenen, Polyimiden oder Polyacrylaten imprägniert werden, um eine gute Benetzung zu erzielen.

Die in den erfindungsgemäßen Elementen verwandten Verbundwerlmtoffe weisen bevorzugt in der Matrix neben Sihziumrarbid auch Phasen von Silizium und Kohlenstoff auf, besonders bevorzugt beinhaltet die Matrix nur Phasen von Siliziumcarbid, Silizium und Kohlenstoff

Der Verbundwerkstoff der erfindungsgemäßen Elemente und Verbunde beinhaltet mindestens 10 Gewichtsprozent Siliziumcarbid bezogen auf die Gesamtmasse, vorteilhafterweise 20 Gewichtsprozent und besonders bevorzugt 30 Gewichtsprozent. Der Anteil der Fasern an der Gesamtmasse sollte mindestens 5 Gewichtsprozent betragen, bevorzugt sogar 10 Prozent und besonders vorteilhaft ist ein Anteil der Fasern über 15 Gewichtsprozent. Weiterhin ist es sehr vorteilhaft, wenn der Verbundwerkstoff der erfindungsgemäßen Elemente und Verbunde ein duktiles Bruchverhalten aufweist.

Um die erfindungsgemäßen Elemente und Verbunde auch als Schutz gegen den Durchschlag großkalibiger Geschosse zu verwenden, sind faserverstärkte Verbundwerkstoffe mit den folgenden Eigenschaften zu verwenden.

Ein guter Schutz wird dann erreicht, wenn der Verbundwerkstoff bezogen auf seine Gesamtmasse 55 bis 80 Gewichtsprozent und besonders bevorzugt 65 bis 75 Gewichtsprozent Siliziumcarbid, 10 bis 40 Gewichtsprozent und besonders bevorzugt 15 bis 25 Gewichtsprozent Kohlenstoff (einschließlich Fasern) und 2 bis 20 Gewichtsprozent und besonders bevorzugt 5 bis 15 Gewichtsprozent Silizium beinhaltet. Hier sollte der Anteil der Fasern bezogen auf das Gesamtgewicht 8 bis 30 Gewichtsprozent und besonders bevorzugt 10 bis 20 Gewichtsprozent betragen. Weiterhin liegt hierbei die mittlere Faserlänge der Verstärkungsfasern zwischen zwischen 0,5 mm und 5 mm und besonders bevorzugt zwischen 1 mm und 2 mm. Außerdem sind die Fasern mindestens mit einer Schicht Kohlenstoff beschichtet.

Ein Element aus einem derartigen Verbundwerkstoff verhindert den Durchschlag von Geschossen mit einer kinetischen Energie bis zu 942,9 J, wenn die minimale Dicke des Elements parallel zur Einschlagsrichtung des Geschosses 20 mm bis 100 mm, bevorzugt 24 mm bis 60 mm und besonders bevorzugt 28 mm bis 40 mm beträgt. Den Durchschlag von Geschossen mit einer kinetischen Energie bis zu 1510 J verhindert es, wenn die minimale Dicke des Elements parallel zur Einschlagsrichtung des Geschosses 25 mm bis 100 mm, bevorzugt 28 mm bis 70 mm und besonders bevorzugt 36 mm bis 50 mm beträgt. Außerdem verhindert es den Durchschlag von Geschossen mit einer kinetischen Energie bis zu 1805 J, wenn die minimale Dicke des Elements parallel zur Einschlagsnichtung des Geschosses 32 mm bis 100 mm, bevorzugt 36 mm bis 80 mm und besonders bevorzugt 40 mm bis 60 mm beträgt.

Weiterhin verhindert ein Element aus einem derartigen Verbundwerkstoff den Durchschlag von Kegelspitzkopfgeschossen mit einem Weichkern aus Blei und einem Vollmantel aus Stahl mit einer Masse bis zu 10,2 g und einer Geschossgesehwindigkeit bis zu 430 m/s, wenn die minimale Dicke des Elements parallel zur Einschlagsrichtung des Geschosses 20 mm bis 100 mm, bevorzugt 24 mm bis 60 mm und besonders bevorzugt 28 mm bis 40 mm beträgt. Den Durchschlag von Flachkopfgeschossen mit einem Weichkern aus Blei und einem Vollmantel aus Kupfer mit einer Masse bis zu 15,6 g und einer Geschoßgeschwindigkeit bis zu 440 m/s verhindert es, wenn die minimale Dicke des Elements parallel zur Einschlagsrichtung des Geschosses 25 mm bis 100 mm, bevorzugt 28 mm bis 70 mm und besonders bevorzugt 36 mm bis 50 mm beträgt. Außerdem verhindert es den Durchschlag von Spitzkopfgeschossen mit einem Weichkern aus Blei mit Stahlpenetrator und einem Vollmantel aus Kupfer mit einer Masse bis zu 4,0 g und einer Geschoßgeschwindigkeit bis zu 950 m/s, wenn die minimale Dicke des Elements parallel zur Einschlagsrichtung des Geschosses 32 mm bis 100 mm, bevorzugt 36 mm bis 80 mm und besonders bevorzugt 40 mm bis 60 mm beträgt.

Ein Verbund aus einem Element aus einem derartigen Verbundwerkstoff mit einem Gewebe aus Verstärkungsfasern, das bevorzugt eine Dicke von bis 15 mm aufweist, die mit einem Klebstoff miteinander verbunden sind, verhindert den Durchschlag von Geschossen mit einer kinetischen Energie bis zu 942,9 J, wenn die minimale Dicke des Elements parallel zur Einschlagsrichtung des Geschosses 3,2 mm bis 30 mm, bevorzugt 4,5 mm bis 25 mm und besonders bevorzugt 6 mm bis 20 mm beträgt. Den Durchschlag von Geschossen mit einer kinetischen Energie bis zu 1510 J verhindert er, wenn die minimale Dicke des Elements parallel zur Einschlagsrichtung des Geschosses 4 mm bis 40 mm, bevorzugt 5,5 mm bis 30 mm und besonders bevorzugt 7,5 mm bis 25 mm beträgt. Außerdem verhindert er den Durchschlag von Geschossen mit einer kinetischen Energie bis zu 1805 J, wenn die minimale Dicke des Elements parallel zur Einschlagsrichtung des Geschosses 4,8 mm bis 50 mm, bevorzugt 6 mm bis 40 mm und besonders bevorzugt 8 mm bis 30 mm beträgt. Den Durchschlag von Geschossen mit einer kinetischen Energie bis zu 2105 J verhindert er, wenn die minimale Dicke des Elements parallel zur Einschlagsrichtung des Geschosses 5,5 mm bis 50 mm, bevorzugt 7 mm bis 40 mm und besonders bevorzugt 10 mm bis 30 mm beträgt. Den Durchschlag von Geschossen mit einer kinetischen Energie bis zu 3272 J verhindert er, wenn die minimale Dicke des Elements parallel zur Einschlagsrichtung des Geschosses 8 mm bis 50 mm, bevorzugt 10 mm bis 40 mm und besonders bevorzugt 12 mm bis 30 mm beträgt.

Weiterhin verhindert ein Verbund aus einem Element aus einem derartigen Verbundwerkstoff mit einem Gewebe aus Verstärkungsfasern, das bevorzugt eine Dicke von bis 15 mm aufweist, die mit einem Klebstoff miteinander verbunden sind, den Durchschlag von Kegelspitzkopfgeschossen mit einem Weichkern aus Blei und einem Vollmantel aus Stahl mit einer Masse bis zu 10,2 g und einer Geschoßgeschwindigkeit bis zu 430 m/s, wenn die minimale Dicke des Elements parallel zur Einschlagsrichtung des Geschosses 3,2 mm bis 30 mm, bevorzugt 4,5 mm bis 25 mm und besonders bevorzugt 6 mm bis 20 mm beträgt. Den Durchschlag von Flachkopfgeschossen mit einem Weichkern aus Blei und einem Vollmantel aus Kupfer mit einer Masse bis zu 15,6 g und einer Geschoßgeschwindigkeit bis zu 440 m/s verhindert er, wenn die minimale Dicke des Elements parallel zur Einschlagsrichtung des Geschosses 4 mm bis 40 mm, bevorzugt 5,5 mm bis 30 mm und besonders bevorzugt 7,5 mm bis 25 mm beträgt. Außerdem verhindert er den Durchschlag von Spitzkopfgeschossen mit einem Weichkern aus Blei mit Stahlpenetrator und einem Vollmantel aus Kupfer mit einer Masse bis zu 4,0 g und einer Geschoßgeschwindigkeit bis zu 950 m/s, wenn die minimale Dicke des Elements parallel zur Einschlagsrichtung des Geschosses 4,8 mm bis 50 mm, bevorzugt 6 mm bis 40 mm und besonders bevorzugt 8 mm bis 30 mm beträgt. Den Durchschlag von Kegelspitzkopfgeschossen mit einem Weichkern aus Blei und einem Stahlpenetrator und einem Vollmantel aus Kupfer mit einer Masse von bis zu 7,9 g und einer Geschoßgeschwindigkeit von bis zu 730 m/s verhindert er, wenn die minimale Dicke des Elements parallel zur Einschlagsrichtung des Geschosses 5,5 mm bis 50 mm, bevorzugt 7 mm bis 40 mm und besonders bevorzugt 10 mm bis 30 mm beträgt. Den Durchschlag von Spitzkopfgeschossen mit einem Weichkern aus Blei und einem Vollmantel aus Stahl mit einer Masse von bis zu 9,5 g und einer Geschoßgeschwindigkeit von bis zu 830 m/s verhindert er, wenn die minimale Dicke des Elements parallel zur Einschlagsrichtung des Geschosses 8 mm bis 50 mm, bevorzugt 10 mm bis 40 mm und besonders bevorzugt 12 mm bis 30 mm beträgt.

Ein besonders guter Schutz wird dann erreicht, wenn der Verbundwerkstoff bezogen auf seine Gesamtmasse 55 bis 80 Gewichtsprozent und bevorzugt 65 bis 75 Gewichtsprozent Siliziumcarbid, 10 bis 40 Gewichtsprozent und bevorzugt 15 bis 25 Gewichtsprozent Kohlenstoff (einschließlich Fasern) und 2 bis 20 Gewichtsprozent und bevorzugt 5 bis 15 Gewichtsprozent Silizium beinhaltet. Hier sollte der Anteil der Fasern bezogen auf das Gesamtgewicht 8 bis 30 Gewichtsprozent und bevorzugt 10 bis 20 Gewichtsprozent betragen. Weiterhin liegt hierbei die mittlere Faserlänge der Verstärkungsfasern zwischen 0,5 mm und 5 mm und bevorzugt zwischen 1 mm und 2 mm. Außerdem sind die Fasern mindestens mit einer Schicht graphitierten Kohlenstoff beschichtet.

Ein Element aus einem derartigen Verbundwerkstoff verhindert den Durchschlag von Geschossen mit einer kinetischen Energie bis zu 942,9 J, wenn die minimale Dicke des Elements parallel zur Einschlagsrichtung des Geschosses 15 mm bis 100 mm, bevorzugt 19 mm bis 60 mm und besonders bevorzugt 23 mm bis 40 mm beträgt. Den Durchschlag von Geschossen mit einer kinetischen Energie bis zu 1510 J verhindert es, wenn die minimale Dicke des Elements parallel zur Einschlagsrichtung des Geschosses 20 mm bis 100 mm, bevorzugt 25 mm bis 70 mm und besonders bevorzugt 30 mm bis 50 mm beträgt. Außerdem verhindert es den Durchschlag von Geschossen mit einer kinetischen Energie bis zu 1805 J, wenn die minimale Dicke des Elements parallel zur Einschlagsrichtung des Geschosses 25 mm bis 100 mm, bevorzugt 31 mm bis 80 mm und besonders bevorzugt 37 mm bis 60 mm beträgt.

Weiterhin verhindert ein Element aus einem derartigen Verbundwerkstoff den Durchschlag von Kegelspitzkopfgeschossen mit einem Weichkern aus Blei und einem Vollmantel aus Stahl mit einer Masse bis zu 10,2 g und einer Geschoßgeschwindigkeit bis zu 430 m/s, wenn die minimale Dicke des Elements parallel zur Einschlagsrichtung des Geschosses 15 mm bis 100 mm, bevorzugt 19 mm bis 60 mm und besonders bevorzugt 23 mm bis 40 mm beträgt. Den Durchschlag von Flachkopfgeschossen mit einem Weichkern aus Blei und einem Vollmantel aus Kupfer mit einer Masse bis zu 15,6 g und einer Geschoßgeschwindigkeit bis zu 440 m/s verhindert es, wenn die minimale Dicke des Elements parallel zur Einschlagsrichtung des Geschosses 20 mm bis 100 mm, bevorzugt 25 mm bis 70 mm und besonders bevorzugt 30 mm bis 50 mm beträgt. Außerdem verhindert es den Durchschlag von Spitzkopfgeschossen mit einem Weichkern aus Blei mit Stahlpenetrator und einem Vollmantel aus Kupfer mit einer Masse bis zu 4,0 g und einer Geschoßgeschwindigkeit bis zu 950 m/s, wenn die minimale Dicke des Elements parallel zur Einschlagsrichtung des Geschosses 25 mm bis 100 mm, bevorzugt 31 mm bis 80 mm und besonders bevorzugt 37 mm bis 60 mm beträgt.

Ein Verbund aus einem Element aus einem derartigen Verbundwerkstoff mit einem Gewebe aus Verstärkungsfasern, das bevorzugt eine Dicke von bis 15 mm aufweist, die mit einem Klebstoff miteinander verbunden sind, verhindert den Durchschlag von Geschossen mit einer kinetischen Energie bis zu 942,9 J, wenn die minimale Dicke des Elements parallel zur Einschlagsrichtung des Geschosses 2,4 mm bis 30 mm, bevorzugt 3,5 mm bis 25 mm und besonders bevorzugt 5 mm bis 20 mm beträgt. Den Durchschlag von Geschossen mit einer kinetischen Energie bis zu 1510 J verhindert er, wenn die minimale Dicke des Elements parallel zur Einschlagsrichtung des Geschosses 3 mm bis 40 mm, bevorzugt 4,5 mm bis 30 mm und besonders bevorzugt 6,5 mm bis 25 mm beträgt. Außerdem verhindert er den Durchschlag von Geschossen mit einer kinetischen Energie bis zu 1805 J, wenn die minimale Dicke des Elements parallel zur Einschlagsrichtung des Geschosses 3,6 mm bis 50 mm, bevorzugt 5 mm bis 40 mm und besonders bevorzugt 7 mm bis 30 mm beträgt. Den Durchschlag von Geschossen mit einer kinetischen Energie bis zu 2105 J verhindert er, wenn die minimale Dicke des Elements parallel zur Einschlagsrichtung des Geschosses 4 mm bis 50 mm, bevorzugt 6 mm bis 40 mm und besonders bevorzugt 8 mm bis 30 mm beträgt. Den Durchschlag von Geschossen mit einer kinetischen Energie bis zu 3272 J verhindert er, wenn die minimale Dicke des Elements parallel zur Einschlagsrichtung des Geschosses 6 mm bis 50 mm, bevorzugt 7,5 mm bis 40 mm und besonders bevorzugt 9 mm bis 30 mm beträgt.

Weiterhin verhindert ein Verbund aus einem Element aus einem derartigen Verbundwerkstoff mit einem Gewebe aus Verstärkungsfasern, das bevorzugt eine Dicke von bis 15 mm aufweist, die mit einem Klebstoff miteinander verbunden sind, den Durchschlag von Kegelspitzkopfgeschossen mit einem Weichkern aus Blei und einem Vollmantel aus Stahl mit einer Masse bis zu 10,2 g und einer Geschoßgeschwindigkeit bis zu 430 m/s, wenn die minimale Dicke des Elements parallel zur Einschlagsrichtung des Geschosses 2,4 mm bis 30 mm, bevorzugt 3,5 mm bis 25 mm und besonders bevorzugt 5 mm bis 20 mm beträgt. Den Durchschlag von Flachkopfgeschossen mit einem Weichkern aus Blei und einem Vollmantel aus Kupfer mit einer Masse bis zu 15,6 g und einer Geschoßgeschwindigkeit bis zu 440 m/s verhindert er, wenn die minimale Dicke des Elements parallel zur Einschlagsrichtung des Geschosses 3 mm bis 40 mm, bevorzugt 4,5 mm bis 30 mm und besonders bevorzugt 6,5 mm bis 25 mm beträgt. Außerdem verhindert er den Durchschlag von Spitzkopfgeschossen mit einem Weichkern aus Blei mit Stahlpenetrator und einem Vollmantel aus Kupfer mit einer Masse bis zu 4,0 g und einer Geschoßgeschwindigkeit bis zu 950 m/s, wenn die minimale Dicke des Elements parallel zur Einschlagsrichtung des Geschosses 3,6 mm bis 50 mm, bevorzugt 5 mm bis 40 mm und besonders bevorzugt 7 mm bis 30 mm und besonders bevorzugt 8 mm bis 30 mm beträgt. Den Durchschlag von Kegelspitzkopfgeschossen mit einem Weichkern aus Blei und einem Stahlpenetrator und einem Vollmantel aus Kupfer mit einer Masse von bis zu 7,9 g und einer Geschoßgeschwindigkeit von bis zu 730 m/s verhindert er, wenn die minimale Dicke des Elements parallel zur Einschlagsrichtung des Geschosses 4 mm bis 50 mm, bevorzugt 6 mm bis 40 mm und besonders bevorzugt 8 mm bis 30 mm beträgt. Den Durchschlag von Spitzkopfgeschossen mit einem Weichkern aus Blei und einem Vollmantel aus Stahl mit einer Masse von bis zu 9,5 g und einer Geschoßchwindigkeit von bis zu 830 m/s verhindert er, wenn die minimale Dicke des Elements parallel zur Einschlagsrichtung des Geschosses 6 mm bis 50 mm, bevorzugt 7,5 mm bis 40 mm und besonders bevorzugt 9 mm bis 30 mm beträgt.

Ein hervorragender Schutz wird dann erreicht, wenn der Verbundwerkstoff bezogen auf seine Gesamtmasse 65 bis 75 Gewichtsprozent Siliziumcarbid, 15 bis 25 Gewichtsprozent Kohlenstoff (einschließlich Fasern) und 5 bis 15 Gewichtsprozent Silizium beinhaltet. Hier sollte der Anteil der Fasern bezogen auf das Gesamtgewicht 10 bis 20 Gewichtsprozent betragen. Weiterhin liegt hierbei die mittlere Faserlänge der Verstärkungsfasern zwischen 1 mm und 2 mm. Außerdem sind die Fasern mindestens mit drei Schichten graphitierten Kohlenstoff beschichtet.

Ein Element aus einem derartigen Verbundwerkstoff verhindert den Durchschlag von Geschossen mit einer kinetischen Energie bis zu 942,9 J, wenn die minimale Dicke des Elements parallel zur Einschlagsrichtung des Geschosses 12 mm bis 100 mm, bevorzugt 15 mm bis 60 mm und besonders bevorzugt 18 mm bis 40 mm beträgt. Den Durchschlag von Geschossen mit einer kinetischen Energie bis zu 1510 J verhindert es, wenn die minimale Dicke des Elements parallel zur Einschlagsrichtung des Geschosses 16 mm bis 100 mm, bevorzugt 20 mm bis 70 mm und besonders bevorzugt 24 mm bis 50 mm beträgt. Außerdem verhindert es den Durchschlag von Geschossen mit einer kinetischen Energie bis zu 1805 J, wenn die minimale Dicke des Elements parallel zur Einschlagsrichtung des Geschosses 20 mm bis 100 mm, bevorzugt 24 mm bis 80 mm und besonders bevorzugt 28 mm bis 60 mm beträgt.

Weiterhin verhindert ein Element aus einem derartigen Verbundwerkstoff den Durchschlag von Kegelspitzkopfgeschossen mit einem Weichkern aus Blei und einem Vollmantel aus Stahl mit einer Masse bis zu 10,2 g und einer Geschoßgeschwindigkeit bis zu 430 m/s, wenn die minimale Dicke des Elements parallel zur Einschlagsrichtung des Geschosses 12 mm bis 100 mm, bevorzugt 15 mm bis 60 mm und besonders bevorzugt 18 mm bis 40 mm beträgt. Den Durchschlag von Flachkopfgeschossen mit einem Weichkern aus Blei und einem Vollmantel aus Kupfer mit einer Masse bis zu 15,6 g und einer Geschoßgeschwindigkeit bis zu 440 m/s verhindert es, wenn die minimale Dicke des Elements parallel zur Einschlagsrichtung des Geschosses 16 mm bis 100 mm, bevorzugt 20 mm bis 70 mm und besonders bevorzugt 24 mm bis 50 mm beträgt. Außerdem verhindert es den Durchschlag von Spitzkopfgeschossen mit einem Weichkern aus Blei mit Stahlpenetrator und einem Vollmantel aus Kupfer mit einer Masse bis zu 4,0 g und einer Geschoßgeschwindigkeit bis zu 950 m/s, wenn die minimale Dicke des Elements parallel zur Einschlagsrichtung des Geschosses 20 mm bis 100 mm, bevorzugt 24 mm bis 80 mm und besonders bevorzugt 28 mm bis 60 mm beträgt.

Ein Verbund aus einem Element aus einem derartigen Verbundwerkstoff mit einem Gewebe aus Verstärkungsfasern, das bevorzugt eine Dicke von bis 15 mm aufweist, die mit einem Klebstoff miteinander verbunden sind, verhindert den Durchschlag von Geschossen mit einer kinetischen Energie bis zu 942,9 J, wenn die minimale Dicke des Elements parallel zur Einschlagsrichtung des Geschosses 2 mm bis 30 mm, bevorzugt 2,5 mm bis 25 mm und besonders bevorzugt 4 mm bis 20 mm beträgt. Den Durchschlag von Geschossen mit einer kinetischen Energie bis zu 1510 J verhindert er, wenn die minimale Dicke des Elements parallel zur Einschlagsrichtung des Geschosses 2,5 mm bis 40 mm, bevorzugt 3 mm bis 30 mm und besonders bevorzugt 5,5 mm bis 25 mm beträgt. Außerdem verhindert er den Durchschlag von Geschossen mit einer kinetischen Energie bis zu 1805 J, wenn die minimale Dicke des Elements parallel zur Einschlagsrichtung des Geschosses 3 mm bis 50 mm, bevorzugt 4 mm bis 40 mm und besonders bevorzugt 6 mm bis 30 mm beträgt. Den Durchschlag von Geschossen mit einer kinetischen Energie bis zu 2105 J verhindert er, wenn die minimale Dicke des Elements parallel zur Einschlagsrichtung des Geschosses 3,5 mm bis 50 mm, bevorzugt 4,5 mm bis 40 mm und besonders bevorzugt 7 mm bis 30 mm beträgt. Den Durchschlag von Geschossen mit einer kinetischen Energie bis zu 3272 J verhindert er, wenn die minimale Dicke des Elements parallel zur Einschlagsrichtung des Geschosses 5 mm bis 50 mm, bevorzugt 6 mm bis 40 mm und besonders bevorzugt 8 mm bis 30 mm beträgt.

Weiterhin verhindert ein Verbund aus einem Element aus einem derartigen Verbundwerkstoff mit einem Gewebe aus Verstärkungsfasern, das bevorzugt eine Dicke von bis 15 mm aufweist, die mit einem Klebstoff miteinander verbunden sind, den Durchschlag von Kegelspitzkopfgeschossen mit einem Weichkern aus Blei und einem Vollmantel aus Stahl mit einer Masse bis zu 10,2 g und einer Geschoßgeschwindigkeit bis zu 430 m/s, wenn die minimale Dicke des Elements parallel zur Einschlagsrichtung des Geschosses 2 mm bis 30 mm, bevorzugt 2,5 mm bis 25 mm und besonders bevorzugt 4 mm bis 20 mm beträgt. Den Durchschlag von Flachkopfgeschossen mit einem Weichkern aus Blei und einem Vollmantel aus Kupfer mit einer Masse bis zu 15,6 g und einer Geschoßgeschwindigkeit bis zu 440 m/s verhindert er, wenn die minimale Dicke des Elements parallel zur Einschlagsrichtung des Geschosses 2,5 mm bis 40 mm, bevorzugt 3 mm bis 30 mm und besonders bevorzugt 5,5 mm bis 25 mm beträgt. Außerdem verhindert er den Durchschlag von Spitzkopfgeschossen mit einem Weichkern aus Blei mit Stahlpenetrator und einem Vollmantel aus Kupfer mit einer Masse bis zu 4,0 g und einer Geschoßgeschwindigkeit bis zu 950 m/s, wenn die minimale Dicke des Elements parallel zur Einschlagsrichtung des Geschosses 3 mm bis 50 mm, bevorzugt 4 mm bis 40 mm und besonders bevorzugt 6 mm bis 30 mm beträgt. Den Durchschlag von Kegelspitzkopfgeschossen mit einem Weichkern aus Blei und einem Stahlpenetrator und einem Vollmantel aus Kupfer mit einer Masse von bis zu 7,9 g und einer Geschoßgeschwindigkeit von bis zu 730 m/s verhindert er, wenn die minimale Dicke des Elements parallel zur Einschlagsrichtung des Geschosses 3,5 mm bis 50 mm, bevorzugt 4,5 mm bis 40 mm und besonders bevorzugt 7 mm bis 30 mm beträgt. Den Durchschlag von Spitzkopfgeschossen mit einem Weichkern aus Blei und einem Vollmantel aus Stahl mit einer Masse von bis zu 9,5 g und einer Geschoßchwindigkeit von bis zu 830 m/s verhindert er, wenn die minimale Dicke des Elements parallel zur Einschlagsrichtung des Geschosses 5 mm bis 50 mm, bevorzugt 6 mm bis 40 mm und besonders bevorzugt 8 mm bis 30 mm beträgt.

Zusätzlich zu den Fasern können auch verschiedene Füllstoffe in die Matrix eingebracht werden. Als Füllstoffe eignen sich insbesondere Silizide, Carbide, Boride, Metalle und Kohlenstoffe, zum Beispiel in Form von Ruß, Graphit, Koks oder Mischungen daraus. Besonders interessant sind hier Siliziumcarbide, B₄C, Ruß, Graphit oder Zirkonboride. Die Verwendung von Ruß und/oder Graphit ist besonders bevorzugt, weil durch diese Substanzen eine gute Umwandlung in SiC ermöglicht wird. Die Verwendung von B₄C ist zur Zeit bei Anwendungen üblich, wenn eine hohe Härte des Verbundkörpers erzielt werden soll. Zirkonboride werden wegen ihrer Hochtemperaturbeständigkeit verwendet. Daher sind bei ihrem Einsatz für die erfindungsgemäß verwendeten Verbundkörper insbesondere bei Beschuß mit Leuchtmunition Vorteile zu erwarten. Sollen aber Verbundkörper mit besonders niedrigem spezifischem Gewicht eingesetzt werden, ist es bevorzugt, andere Füllstoffe als Zirkonborid, das eine hohe Dichte hat, zu verwenden.

Die Menge der gegebenenfalls einzusetzenden Füllstoffe kann in Abhängigkeit von den zu erzielenden Eigenschaften des Verbundkörpers bestimmt werden. Bei Verwendung von reagierenden Füllstoffen wie Ruß oder Graphit liegt die Menge bevorzugt bei bis zu 40 Gew.%, bezogen auf die Ausgangsmischung. Bei höheren Mengen kann eine Deformation des Körpers oder auch eine Rißbildung auftreten. Mehr bevorzugt liegt die Menge bei bis zu 30 Gew.%. Werden nicht-reagierende Füllstoffe, z.B. SiC, eingesetzt, sind auch höhere Konzentrationen möglich. Der Anteil an solchen Füllstoffen hängt im wesentlichen von der Sprödigkeit und der Härte, die eingestellt werden sollen, ab.

Ein bedeutender Vorteil der Verwendung des faserverstärkten Verbundwerkstoffs mit keramischer Matrix liegt darin, daß die Elemente direkt in der Form des gewünschten Strukturbauteils hergestellt werden kann, so daß sich Formgebungsschritte nach Herstellung der Elemente vermeiden lassen und somit eine weitere Kostenreduzierung bei der Herstellung von beispielsweise Schutz- oder Panzerungsplatten erhalten wird. Angesichts der hohen Bruchfestigkeit der Elemente ist es nicht umbedingt erforderlich, die erfindungsgemäßen Elemente mit einer rückwärtigen Verstärkung zu versehen, wobei das Verstärkungsmaterial wie Fasergewebe (z.B. Aramidfasern) oder Metallplatten auf die Rückseite des Verbundwerkstoffs geklebt wird, um eine beschußfeste Panzerungsplatte zu erhalten. Vielmehr kann der Verbundkörper selbst bereits diese Panzerungsplatte darstellen. Allerdings ist die Dicke eines erfindungsgemäßen Elements aus einem Verbundwerkstoff größer als die, die für das Element benötigt wird, wenn durch die rückwärtige Verstärkung ein erfindungsgemäßer Verbund gleicher Wirkung bereitgestellt wird.

Die Herstellung des mindestens zum Teil mit Kohlenstoff-und/oder Graphitfasern faserverstärkten Verbundwerkstoffs mit keramischer Matrix, die Siliziumcarbid beinhaltet, kann beispielsweise nach dem aus DE 197 11 829 C1 oder DE 197 10 105 A1 bekannten Verfahren erfolgen. Auf diese beiden Druckschriften wird im Hinblick auf das Herstellungsverfahren ausdrücklich Bezug genommen.

Grundsätzlich können zur Herstellung von faserverstärkten C/SiC-Keramiken alle bekannten Verfahren benutzt werden. Bei den oben zitierten Verfahren werden zur Herstellung von Verbundwerkstoffen, in die einzelne Fasern (oder Faserbündel) eingebracht werden, die folgenden Fertigungsschritte durchlaufen.

Die eingebrachten Fasern werden z.B. wie in DE 197 11 829 C1 und DE 197 10 105 A 1 beschrieben, vorbehandelt bzw. hergestellt und über einen Mischer mit einem Harz, das Kohlenstoff liefert, vermischt und über eine Preßform in die Ausgangsform abgeformt und bei Temperaturen bis zu etwa 150°C ausgehärtet. Die so entstandenen Formkörper (CFC-Vorkörper) werden bei Temperaturen von bis etwa 1000°C pyrolysiert und eventuell anschließend bei Temperaturen von bis zu etwa 2000°C graphitiert.

Der so erhaltene CFC-Vorkörper wird anschließend bei Temperaturen von bis zu etwa 1800°C im Vakuum mit flüssigem Silizium imprägniert. Hierbei wandelt sich ein Großteil des Matrixkohlenstoffes in einer exothermen Reaktion mit dem eingebrachten Silizium zu Siliziumcarbid um. Aufgrund einer speziellen Vorbehandlung der Fasern bleiben die Kohlenstoffasern bei dieser Reaktion erhalten und können somit zur Duktilisierung der Keramik beitragen.

Ebenso geeignet sind die bekannten 2D- und 3D- CFC-Gewebestrukturen mit hohen Faservolumengehalten, die unter anderem direkt aus Polyacrylnitril-Faserflächengebilden über das Verfahren der Direktoxidation und durch nachfolgende Pyrolyse hergestellt werden können. Hierbei werden insbesondere die folgenden Verfahrensschritte durchlaufen.

Die Kohlenstoffaser-Verstärkungsstruktur wird in eine Form gebracht, die der gewünschten Endform entspricht. Bei 130°C wird der Faserkörper im Vakuum und unter Druck mit einer Harzmatrix imprägniert und nach dem Aushärten und Entformen bei Bedarf noch nachbearbeitet.

Die so entstandenen CFK-Vorkörper werden anschließend bei Temperaturen bis zu 1000°C pyrolysiert. Dann kann eine Nachverdichtung dieses CFC-Materials mit einem kohlenstoffhaltigen Polymer auf Pech- oder Harzbasis in einem oder mehreren Schritten erfolgen, wobei jedem Nachverdichtungsschritt ein weiterer Pyrolyse-Schritt folgt. So wird ein für die folgende Infiltration geeignetes CFC-Material erhalten, in dem die Kohlenstoffasern ausreichend geschützt vor dem Angriff insbesondere des flüssigen Siliziums vorliegen. Abschließend kann eine Graphitierung des CFC- Verbundwerkstoffs bei Temperaturen von bis etwa 2000°C erfolgen.

Die Silizierung wird bei Temperaturen von bis zu etwa 1800°C im Vakuum durchgeführt.

Über die oben beschriebenen konkreten Verfahren können zum Beispiel direkt die Formen von Fahrzeugtüren oder bestimmten Flugzeugkomponenten gebildet werden.

Als Infiltrationsmaterial kommen neben Silizium auch andere Materialien in Betracht, die dem Silizium hinzugegeben werden. Grundsätzlich müssen die zur Infiltration verwendeten Materialien in der Lage sein, in dem Temperaturbereich von bis zu 1800°C zu schmelzen. Als weitere Infiltrationsmaterialien kommen auch Aluminium, Bor, Magnesium, Stickstoff, Kohlenstoff und deren Verbindungen oder Mischungen, sowie Silizide in Betracht. Auch können ausschließlich Silizide infiltriert werden, um eine Siliziumcarbid beinhaltende Matrix zu bilden.

Insbesondere bevorzugt wird bei der Herstellung der Verbundkörper Silizium als Infiltrationsmaterial verwendet. Silizium werden bei der Zugabe anderer Stoffe bevorzugt Silizide wie beispielsweise Molybdänsilizide, Eisensilizide, Chromsilizide, Tantalsilizide oder Mischungen dazugegeben. Derartige Materialien können den Schmelzpunkt des Infiltrationsmaterials verändern.

Ebenso ist es auch möglich, Polymere auf Siliziumbasis als Infiltrationsmaterial zu verwenden. Beispiele solcher Polymere sind beispielsweise borhaltige Polysilazane.

Nachfolgend werden zur näheren Erläuterung dieser Erfindung Ausführungsbeispiele angegeben.

Beispiele 1 und 2: Herstellung von Elementen aus einem mit Fasern verstärkten Verbundwerkstoff mit keramischer Matrix.

Zunächst wurde ein Prepreg aus 3K-Kohlenstoffaserbündeln (3000 Einzelfilamente) hergestellt, wobei die Kohlenstoffasern auf der Basis von PAN-Fasern hergestellt worden sind. Hierzu wurden die Faserbündel zu einem Köpergewebe verflochten, anschließend das Gewebe in Phenolharz (Resol-Typ) getränkt und mit einem Trennpapier auf beiden Seiten versehen. Danach wurde das harzgetränkte Gewebe auf 130 °C erhitzt, um die Klebrigkeit des Prepegs herzustellen.

Anschließend wurde die Prepregplatten übereinandergelegt und zu einem Preßkörper verpreßt. Dieser wurde anschließend bei 900 °C gebrannt, wobei die Brennkurve im Bereich zwischen 400 °C und 600 °C eine Steigung von 5 °C pro Minute aufwies. Anschließend wurde der so erhaltene CFC-Körper dreimal hintereinander zunächst jeweils mit einem Steinkohlenteerpech mit einem Erweichungspunkt von 60 °C imprägniert und dann bei ebenfalls bei 900 °C gebrannt, um ihn weiter zu verdichten.

Der so erhaltene CFC- Körper wurde danach zunächst in einem Backenbrecher (Hersteller: Fa. Alpine Hosokawa) zerkleinert und anschließend in einer Schneidmühle (Hersteller: Fa. Alpine Hosokawa) in Faserbündel zerschnitten. Abschließend wurden die Faserbündel in einer Taumelsiebanlage (Hersteller Fa. Allgaier) in einzelne Faserfraktionen sortiert, wobei die Siebeinsätze (Siebfläche 1,15 m²) eine lichte Maschenweite von 0,5 mm, 1 mm, 2 mm, 3 mm, 4 mm und 6 mm aufwiesen gemäß ISO 9044. Als Ergebnis dieses Siebprozesses wurden verschiedene Faserfraktionen erhalten, wodurch u.a. eine Fraktion A mit Fasern der Länge 12,45 mm bis 17,55 mm und der Breite 660 µm bis 2,26 mm, eine Fraktion B mit Fasern der Länge 8,5 mm bis 13,5 mm und der Breite 690 µm bis 2,21 mm, eine Fraktion C mit Fasern der Länge 5,5 mm bis 10,5 mm und der Breite 760 µm bis 2,16 mm, eine Fraktion D mit Fasern der Länge 0,2 mm bis 3 mm und der Breite 200 µm bis 1 mm, eine Fraktion E mit Fasern der Länge 0,1 mm bis 3 mm und der Breite 50 bis 500 µm und eine Fraktion F mit Fasern der Länge bis 0,3 mm und der Breite 8 bis 200 µm vorlagen.

Danach wurden für Proben vom Beispiel 1 eine Mischung 1 aus 70 % der Gesamtmasse Fasern gemäß der Zusammensetzung 35 % Fraktion D, 35 % Fraktion E und 30 % Fraktion F und als Bindemittel 30 % der Gesamtmasse Phenolharz (Resol- Typ) und für Proben vom Beispiel 2 eine Mischung 2 aus 70 % der Gesamtmasse Fasern gemäß der Zusammensetzung 12 % Fraktion A, 18 % Fraktion B, 40 % Fraktion C und 30 % Fraktion D und als Bindemittel 21 % der Gesamtmasse Phenolharz (Resol-Typ) und 9 % der Gesamtmasse Steinkohlenteerpech (Erweichungspunkt: 230 °C) in einem Z-Arm-Kneter (Hersteller: Fa. Werner & Pfleiderer) durch 15 Minuten Mischen bei einer Drehzahl von 30 l/min hergestellt. Anschließend wurden jeweils 1200 g der Mischung 1 in einer Gesenkpresse in quadratischer Preßform der Seitenlänge 325 mm bei einem spezifischen Druck von 12 Kp/cm² und einer Temperatur von 130 °C verpreßt. Diese Temperatur wurde 3 h bei konstantem Preßdruck gehalten. Nach dem Abkühlen auf 30°C wurde die ausgehärtete Platte aus der Preßform herausgenommen. Durch diese Vorgehensweise wurde eine CFK-Platte mit einer Höhe (Dicke) von 10 mm und einer Dichte von 1,2 g/cm³ erhalten.

Analog wurden jeweils 5100 g der Mischung 2 Platten mit einer Dicke von 38 mm mit einer Dichte von 1,18 g/cm³ erhalten.

Danach erfolgte die Carbonisierung der Proben bei 900 °C unter Schutzgas (Heizrate von 2 K/min). Die Abkühlung der Platten auf Raumtemperatur erfolgte ungeregelt mit bis zu 10 K/min. Nach dem Carbonisieren wiesen die Platten Dichten von 1,05 g/cm³ (Beispiel 1) und 1,03 g/cm³ (Beispiel 2) auf.

Abschließend erfolgte die Infiltrierung der Proben bei 1700°C mit flüssigem Silizium im Vakuum in einen Hochtemperaturofen unter einem Silizumangebot (Korngröße bis zu 5 mm) des Anderhalbfachen der Probenmasse, wodurch die SiC-Struktur der Matrix der Proben erzeugt wird. Hierbei erfolgte die Silizierung zunächst bei einem Temperaturanstieg von 10 K/min auf 1400°C und dann mit 5 K/min auf 1800°C. Die Temperatur wurde danach 45 min gehalten, dann erfolgte ein Temperaturabfall mit 5 K/min auf 1400°C und anschließend eine ungeregelte Abkühlung. Die so erhaltenen C/SiC- Verbundwerkstoffe wiesen Dichten von 2,4 g/cm³ und 2,35 g/cm³ auf. Die so hergestellten Platten aus dem C/SiC-Verbundwerkstoff des Beispiels 1 wiesen einen Faseranteil an der Gesamtmasse von 15 % auf, und eine Zusammensetzung bezogen auf die Gesamtmasse von 68 % Siliziumcarbid, 22 % Kohlenstoff und 10 % Silizium. Die mittlere Faserlänge betrug 1,5 mm. Die Platten aus dem C/SiC- Verbundwerkstoff des Beispiels 2 wiesen einen Faseranteil an der Gesamtmasse von 17 % auf, und eine Zusammensetzung bezogen auf die Gesamtmasse von 58 % Siliziumcarbid, 31 % Kohlenstoff und 11 % Silizium. Die mittlere Faserlänge der Verstärkungsfasern betrug 10 mm.

Beispiel 3: Herstellung eines Elements aus einem mit Fasern verstärkten Verbundwerkstoff mit keramischer Matrix mit einer rückseitigen Verstärkung.

Die gemäß dem Beispiel 1 hergestellten Platten der Dicke 10 mm wurden, um sie zum Schutz gegen Beschuß einzusetzen, zusätzlich mit einem konventionellen rückwärtigen Verstärkungssystem (Backing) versehen. Hierzu wurde die Rückseite der keramischen Platte zunächst quarzsandgestraht und danach 10 Lagen Aramidfasergewebe T 750 (Akzo Nobel, Deutschland) mit der PUR- Kleber SIKAFLEX® 255 FC (Hersteller: Sika Chemie GmbH, Deutschland) und einem Haftprimer auf die Rückseite der C/SiC- Platte geklebt.

### Ergebnisse von Beschußversuchen

Mit den Elementen aus mit Fasern verstärkten Verbundwerkstoffen mit keramischer Matrix mit rückseitige Verstärkung gemäß Beispiel 3 und ohne rückseitige Verstärkung gemäß Beispiel 2 wurden Beschußversuche durchgeführt. Das Prüfverfahren bestand in einer Durchschußprüfung nach der Euro-Norm, DIN EN 1523. Die Prüfanforderungen lagen in einer Durchschußhemmung in den Widerstandsklassen nach Tabelle 1 der Euro-Norm, DIN EN 1522. Für den Versuchsaufbau wurden die Platten an ein Gestell gespannt, wobei das Prüfmuster im Winkel von 90° zur Schußrichtung befestigt wurde. Die Schußentfernung war 5 bzw. 10 m. Der Trefferabstand war 120 mm ± 10 mm.

Zunächst wurden an Platten der Abmessungen 325 mm x 278 mm x 38 mm, die aus Platten gemäß dem Beispiel 2 hergestellt wurden, Beschußversuche durchgeführt. Es wurde gefunden, daß die Platten folgenden Beschußversuchen standhielten, wobei jeweils mindestens drei Schüsse auf eine Platte abgegeben wurden.

### Versuch 1 (Beschußklasse FB 3)

Als Waffe wurde die Waffenart 'Prüflauf' mit einem Kaliber 357 Magnum verwendet, und das Geschoß wies einen Vollmantel aus Stahl, einen Kegelspitzkopf und Weichkern aus Blei auf. Das Geschoßgewicht lag bei 10,2 g. Die Prüfentfernung betrug 5 m. Die Geschoßgeschwindigkeit betrug 430 m/s, die Geschoßenergie 942,9 J.

### Versuch 2 (Beschußklasse FB 4)

Als Waffe wurde die Waffenart 'Prüflauf' mit einem Kaliber 44 Rem. Magnum verwendet, und das Geschoß wies einen Vollmantel aus Kupfer, einen Flachkopf und Weichkern aus Blei auf. Das Geschoßgewicht lag bei 15,6 g. Die Prüfentfernung betrug 5 m. Die Geschoßgeschwindigkeit betrug 440 m/s, die Geschoßenergie 1510 J.

Es zeigte sich, daß die Platten bei diesem Versuch auch gegen einen Mehrfachbeschuß beständig sind, wenn die Geschosse in einem Abstand von 50 mm einschlagen, was der Wirkung automatischer Waffen entspricht (Multi- hit-Tauglichkeit).

### Versuch 3 (Beschußklasse FB 5)

Als Waffe wurde die Waffenart 'Prüflauf' mit einem Kaliber 5,56 mm x 45 mm verwendet, und das Geschoß wies einen Vollmantel aus Kupfer, einen Spitzkopf und Weichkern aus Blei mit Stahlpenetrator (Typ SS 109) auf. Das Geschoßgewicht lag bei 4,0 g. Die Prüfentfernung betrug 10 m. Die Geschoßgeschwindigkeit betrug 950 m/s, die Geschoßenergie 1805 J.

Bei allen diesen Beschußversuchen auf die großformatige Schutzelemente aus dem C/SiC- Verbundwerkstoff zeigte sich kein Riß in den Elementen, der eine weitere Verwendung als Schutz verhindert.

Außerdem wurden Elemente der Abmessung 300 mm x 300 mm gemäß dem Beispiel 3, die eine nur 10 mm dicke C/SiC-Verbundwerkstoffplatte und eine rückwärtige Verstärkung aufwiesen, den Beschußversuchen ausgesetzt.

### Versuch 4 (Beschußklasse FB 3)

Als Waffe wurde die Waffenart 'Prüflauf' mit einem Kaliber 357 Magnum verwendet, und das Geschoß wies einen Vollmantel aus Stahl, einen Kegelspitzkopf und Weichkern aus Blei auf. Das Geschoßgewicht lag bei 10,2 g. Die Prüfentfernung betrug 5 m. Die Geschoßgeschwindigkeit betrug 430 m/s, die Geschoßenergie 942,9 J.

### Versuch 5 (Beschußklasse FB 4)

Als Waffe wurde die Waffenart 'Prüflauf' mit einem Kaliber 44 Rem. Magnum verwendet, und das Geschoß wies einen Vollmantel aus Kupfer, einen Flachkopf und Weichkern aus Blei auf. Das Geschoßgewicht lag bei 15,6 g. Die Prüfentfernung betrug 5 m. Die Geschoßgeschwindigkeit betrug 440 m/s, die Geschoßenergie 1510 J.
Es zeigte sich, daß die Platten bei diesem Versuch auch gegen einen Mehrfachbeschuß beständig sind, wenn die Geschosse in einem Abstand von 50 mm einschlagen, was der Wirkung automatischer Waffen entspricht (Multi- hit-Tauglichkeit).

### Versuch 6 (Beschußklasse FB 4+)

Als Waffe wurde eine Kalaschnikow AK 47 mit einem Kaliber 7,62 mm x 39 mm verwendet, und das Geschoß wies einen Vollmantel aus Kupfer, einen Kegelspitzkopf und Weichkern aus Blei mit Stahlpenetrator auf. Das Geschoßgewicht lag bei 7,9 g. Die Prüfentfernung betrug 10 m. Die Geschoßgeschwindigkeit betrug 730 m/s, die Geschoßenergie 2105 J.

### Versuch 7 (Beschußklasse FB 5)

Als Waffe wurde die Waffenart 'Prüflauf' mit einem Kaliber 5,56 mm x 45 mm verwendet, und das Geschoß wies einen Vollmantel aus Kupfer, einen Spitzkopf und Weichkern aus Blei mit Stahlpenetrator (Typ SS 109) auf. Das Geschoßgewicht lag bei 4,0 g. Die Prüfentfernung betrug 10 m. Die Geschoßgeschwindigkeit betrug 950 m/s, die Geschoßenergie 1805 J.

### Versuch 8 (Beschußklasse FB 6)

Als Waffe wurde die Waffenart 'Prüflauf' mit einem Kaliber 7,62 mm x 51 mm verwendet, und das Geschoß wies einen Vollmantel aus Stahl, einen Spitzkopf und Weichkern aus Blei auf. Das Geschoßgewicht lag bei 9,5 g. Die Prüfentfernung betrug 10 m. Die Geschoßgeschwindigkeit betrug 830 m/s, die Geschoßenergie 3272 J.

Auch bei diesen Beschußversuchen auf die großformatige Schutzelemente aus dem C/SiC- Verbundwerkstoff mit rückwärtiger Verstärkung zeigte sich kein Riß in den Elementen, der eine weitere Verwendung als Schutz verhindert.

Die Umgebungstemperatur bei den Beschußprüfungen lag bei 20 bis 22°C.

Aufgrund der obigen Ergebnisse ist ersichtlich, daß Elemente aus C/SiC- Verbundwerkstoffen mit und ohne Rückverstärkung beschossen werden können, ohne daß sie zerspringen. Die Platten zeigen hierbei eine Beständigkeit auch bei hohen Anforderungen. Insbesondere kann die Dicke der C/SiC-Platten bei einer rückwärtigen Verstärkung nach konventioneller Technik so gering gewählt werden, daß auch ein wirtschaftlicher Einsatz gegeben ist und trotzdem eine hohe Sicherheit gewährleistet wird.

## Patentansprüche

1. Verbund aus einem Backing ausgewählt aus Metallplatten und einem Gewebe aus Fasern, aufgeklebt auf einer Platte mit einer Dicke von mindestens 2,4 mm aus einem mit Kohlenstoff- und/ oder Graphitfasern verstärkten Verbundwerkstoff mit keramischer Matrix, enthaltend 55 bis 80 Gewichtsprozent Siliciumcarbid, 10 bis 40 Gewichtsprozent Kohlenstoff und 2 bis 20 Gewichtsprozent Silicium, bezogen auf die Gesamtmasse des Verbundwerkstoffs, wobei der Faseranteil des Verbundwerkstoffs 8 bis 30 Gewichtsprozent des Gesamtgewichts beträgt, die mittlere Faserlänge 0,5 mm bis 5 mm beträgt, und die Fasern mit mindestens einer Schicht graphitierten Kohlenstoffs beschichtet sind.

2. Verbund nach Anspruch 1, **dadurch gekennzeichnet, dass** das Backing ein Gewebe von Aramidfasern ist.

3. Verbund nach Anspruch 1 oder 2, wobei die Dicke des Backing-Gewebes bis zu 15 mm beträgt.

4. Verbund nach Anspruch 1, **dadurch gekennzeichnet, dass** zusätzlich Fasern mit einer gröBeren Länge als 4 mm in dem Verbundwerkstoff enthalten sind.

5. Verbund nach Anspruch 1, **dadurch gekennzeichnet, dass** der Verbundwerkstoff zusätzlich Füllstoffe ausgewählt aus Siliciden, Carbiden, Boriden und Kohlenstoffen enthält.

6. Verbund nach Anspruch 5, **dadurch gekennzeichnet, dass** die Füllstoffe ausgewählt sind aus Siliciumcarbid, Borcarbid, Ruß, Graphit und Zirknnborid.

7. Verfahren zur Herstellung von Verbunden nach Anspruch 1, **dadurch gekennzeichnet, dass** mit mindestens einer Schicht graphitierten Kohlenstoffs beschichtete Kohlenstofffasern mit einem Harz vermischt werden, in einer Pressform zu Platten gepresst werden, nach dem Aushärten bei einer Temperatur von bis zu 1000 °C pyrolysiert werden und dann bei Temperaturen bis zu 1800 °C im Vakuum mit flüssigem Silicium imprägniert werden, und die erhaltenen C/SiC-Platten anschließend mit einem Backing ausgewählt aus Geweben und Metall platten verklebt werden.

8. Verfahren gemäß Anspruch 7, **dadurch gekennzeichnet, dass** mit mindestens einer Schicht graphitierten Kohlenstoffs beschichtete Kohlenstofffasern" in Form eines 2D oder 3D Gewebes eingesetzt werden

9. Verfahren gemäß Anspruch 7 oder 8, **dadurch gekennzeichnet, dass** nach der Pyrolyse eine Graphitierung bei bis zu 2000 °C erfolgt.

10. Verwendung von Verbunden gemäß Anspruch 1 zur Absorption mindestens einer stoßartigen punktuellen Belastung.

11. Verwendung gemäß Anspruch 10 zur Panzerung von Automobilen, militärischen Kraftfahrzeugen einschließlich Panzern, Flugzeugen, Helikoptern, Schiffen, Bahnfahrzeugen, Raumfahrzeugen, Tresoren und feststehenden Objekten.

12. Verwendung gemäß Anspruch 10 in Schutzwesten.

## Claims

1. Composite consisting of a backing selected from metal plates and a woven fabric of fibres, stuck onto a plate with a thickness of at least 2.4 mm consisting of a carbon- and/or graphite-fibre-reinforced composite material with a ceramic matrix containing 55 to 80% by weight silicon carbide, 10 to 40% by weight carbon and 2 to 20% by weight silicon, relative to the total mass of the composite material, with the fibre portion of the composite material amounting to-8 to 30% by weight of the total weight, the average fibre length amounting to 0.5 mm to 5 mm, and the fibres being coated with at least one layer of graphitized carbon.

2. Composite according to claim 1, **characterised in that** the backing is a woven fabric of aramide fibres.

3. Composite according to claim 1 or 2, wherein the thickness of the backing woven fabric amounts to up to 15 mm.

4. Composite according to claim 1, **characterised in that** in addition fibres that have a length greater than 4 mm are contained in the composite material.

5. Composite according to claim 1, **characterised in that** the composite material additionally contains fillers selected from silicides, carbides, borides and carbons.

6. Composite according to claim 5, **characterised in that** the fillers are selected from silicon carbide, boron carbide, soot, graphite and zirconium boride.

7. Method for producing composites according to claim 1, **characterised in that** carbon fibres that are coated with at least one layer of graphitized carbon are mixed with a resin, are pressed in a pressing mould to form plates, after hardening are pyrolyzed at a temperature of up to 1000°C and then are impregnated with liquid silicon at temperatures of up to 1800°C under vacuum, and the C/SiC-plates that are obtained are subsequently bonded with a backing selected from woven fabrics and metal plates.

8. Method according to claim 7, **characterised in that** carbon fibres that are coated with at least one layer of graphitized carbon are used in the form a 2D or 3D woven fabric.

9. Method according to claim 7 or 8, **characterised in that** after the pyrolysis graphitization is effected at up to 2000°C.

10. Use of composites according to claim 1 for the absorption of at least one shock-like, point-focal load.

11. Use according to claim 10 for armour plating automobiles, military motor vehicles including tanks, aeroplanes, helicopters, ships, railway vehicles, spacecraft, strong rooms and stationary objects.

12. Use according to claim 10 in protective vests.

## Revendications

1. composite constitué d'un support choisi parmi des plaques métalliques et un tissu en fibres, collé sur une plaque d'une épaisseur d'au moins 2,4 mm, constituée d'un matériau composite renforcé par des fibres de carbone et/ou de graphite avec matrice en céramique, contenant de 55 à 80 pour cent en poids de carbure de silicium, 10 à 40 pour cent en poids de carbone et 2 à 20 pour cent en poids de silicium, par rapport à la masse totale du matériau composite, dans lequel la proportion de fibres du matériau composite est de 8 à 30 pour cent en poids du poids total, la longueur moyenne des fibres est de 0,5 à 5 mm, et les fibres sont revêtues au moins d'une couche de carbone graphité.

2. Composite selon la revendication 1,
**caractérisé en ce que**
le support est un tissu en fibres d'aramide.

3. Composite selon la revendication 1 ou 2,
dans lequel
l'épaisseur du support-tissu va jusqu'à 15 mm.

4. Composite selon la revendication 1,
**caractérisé en ce que**
des fibres d'une longueur supérieure à 4 mm sont également contenues dans le matériau composite.

5. Composite selon la revendication 1,
**caractérisé en ce que**
le matériau composite contient également des charges choisies parmi les siliciures, les carbures, les borures et les carbones.

6. Composite selon la revendication 5,
**caractérisé en ce que**
les charges sont choisies parmi le carbure de silicium, le carbure de bore, le noir de carbone, le graphite et le borure de zirconium.

7. Procédé d'obtention de composites selon la revendication 1,
**caractérisé en ce qu'**
on mélange des fibres de carbone revêtues d'au moins une couche de carbone graphité avec une résine, on les compresse en plaques dans un moule par pression, on les pyrolyse à une température jusqu'à 1 000°C après le durcissement, puis on les imprègne de silicium liquide sous vide à des températures de jusqu'à 1 800°C, et les plaques de C/SiC obtenues sont ensuite collées avec un support choisi parmi des tissus et des plaques métalliques.

8. Procédé selon la revendication 7,
**caractérisé en ce que**
des fibres de carbone revêtues d'au moins une couche de carbone graphité sont utilisées sous forme d'un tissu bidirectionnel ou tridimensionnel.

9. Procédé selon la revendication 7 ou 8,
**caractérisé en ce qu'**
un graphitage a lieu à jusqu'à 2 000°C après la pyrolyse,

10. Utilisation de composites selon la revendication 1, pour l'absorption au moins d'une contrainte ponctuelle du type choc,

11. Utilisation selon la revendication 10, pour le blindage d'automobiles, de véhicules militaires y compris les blindés, d'avions, d'hélicoptères, de bateaux, de véhicules ferroviaires, d'engins spatiaux, de coffres-forts et d'objets fixes.

12. Utilisation selon la revendication 10, dans les gilets pare-balles.
